(19) 

Europäisches
Patentamt

European
Patent Office

Office européen
des brevets

(11) **EP 4 734 582 A1**

(12) **EUROPEAN PATENT APPLICATION**
published in accordance with Art. 153(4) EPC

(43) Date of publication:
**29.04.2026  Bulletin 2026/18**

(21) Application number: **24830124.4**

(22) Date of filing: **28.04.2024**

(51) International Patent Classification (IPC):
***H04W 16/18*** (2009.01)

(52) Cooperative Patent Classification (CPC):
**G01S 3/14; G01S 5/08; H04W 16/18; H04W 24/08;
H04W 88/08**

(86) International application number:
**PCT/CN2024/090306**

(87) International publication number:
**WO 2025/001475 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.06.2023  CN 202310763114**

(71) Applicant: **ZTE Corporation
Shenzhen, Guangdong  518057 (CN)**

(72) Inventors:
• **ZHENG, Zheng
  Shenzhen, Guangdong 518057 (CN)**
• **LI, ping
  Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **POSITION MEASUREMENT METHODS, COMMUNICATION APPARATUS, AND STORAGE
MEDIUM**

(57)    The present disclosure provides position measurement methods, a communication apparatus, and a storage medium. A position measurement method comprises: by means of a sensor configured for an intelligent reflecting surface, measuring position information of the intelligent reflecting surface; and sending the position information to a base station.

FIG. 5

## Description

The present disclosure claims a priority to Chinese Patent Application No. 202310763114.0, and filed on June 26, 2023, the entire content of which is incorporated into the present application by reference.

## TECHNICAL **FIELD**

The present disclosure relates to the field of wireless communication technologies, and in particular, to a position measurement method, a communication apparatus, and a storage medium.

## BACKGROUND

An intelligent reflecting surface or a reconfigurable intelligent surface (RIS) is an artificial electromagnetic material with programmable electromagnetic characteristics. By controlling a phase of each element, a direction of outgoing beam focusing may be regulated, thereby achieving control over an electromagnetic environment. The use of RIS enables intelligent adjustment of the wireless network environment, which greatly improves the coverage performance of the wireless communication network.

## SUMMARY

In an aspect, a position measurement method is provided and the position measurement method is applied to an intelligent reflecting surface, where the intelligent reflecting surface is configured with a sensor. The position measurement method includes: obtaining position information of the intelligent reflecting surface by measuring with the sensor; and sending the position information to a base station.

In another aspect, a position measurement method is provided, and the position measurement method is applied to a base station. The position measurement method includes: receiving position information sent from an intelligent reflecting surface, where the position information is measured by the intelligent reflecting surface with a sensor.

In yet another aspect, a measurement apparatus is provided, applied to an intelligent reflecting surface, and the intelligent reflecting surface is configured with a sensor. The measurement apparatus includes: a measurement module, configured to obtain position information of an intelligent reflecting surface by measuring with a sensor; and a sending module, configured to send the position information to a base station.

In yet another aspect, a measurement apparatus is provided, applied to a base station. The measurement apparatus includes: a receiving module, configured to receive position information sent from an intelligent reflecting surface, where the position information is measured by the intelligent reflecting surface with a sensor.

In yet another aspect, a communication node is provided, and includes: a memory and a processor; the memory is coupled with the processor; the memory is configured to store a computer program; and the processor, when executing the computer program, implements the position measurement method described in any one of the above aspects.

In yet another aspect, a computer readable storage medium is provided and the computer readable storage medium has stored computer program instructions thereon, and the computer program instructions, when executed by a processor, implement the position measurement method described in any one of the above aspects.

In yet another aspect, a computer program product is provided, the computer program product includes computer program instructions, and the computer program instructions, when executed by a processor, implement the position measurement method described in any one of the above aspects.

## BRIEF DESCRIPTION OF THE DRAWINGS

In order to describe technical solutions in the present disclosure more clearly, the drawings that some embodiments of the present disclosure need to use, will be briefly introduced below. Obviously, the drawings in the following description are merely drawings of some embodiments of the present disclosure, and other drawings may be obtained according to these drawings for the ordinary skilled in the art.

FIG. 1 is a schematic diagram of an architecture of a communication system, according to some embodiments of the present disclosure.
FIG. 2 is a structural schematic diagram of a base station, according to some embodiments of the present disclosure.
FIG. 3 is a structural schematic diagram of an RIS, according to some embodiments of the present disclosure.
FIG. 4 is a schematic diagram of a measurement method of a sensor module, according to some embodiments of the present disclosure.
FIG. 5 is a flow chart of a method for determining a codebook library, according to some embodiments of the present disclosure.

FIG. 6 is a flow chart of another method for determining a codebook library, according to some embodiments of the present disclosure.

FIG. 7 is a schematic diagram of a panel of an RIS, according to some embodiments of the present disclosure.

FIG. 8 is a flow chart of yet another method for determining a codebook library, according to some embodiments of the present disclosure.

FIG. 9 is a flow chart of yet another method for determining a codebook library, according to some embodiments of the present disclosure.

FIG. 10 is a flow chart of yet another method for determining a codebook library, according to some embodiments of the present disclosure.

FIG. 11 is a flow chart of yet another method for determining a codebook library, according to some embodiments of the present disclosure.

FIG. 12 is a structural schematic diagram of a measurement apparatus, according to some embodiments of the present disclosure.

FIG. 13 is a structural schematic diagram of another measurement apparatus, according to some embodiments of the present disclosure.

FIG. 14 is a structural schematic diagram of a communication apparatus, according to some embodiments of the present disclosure.

## DETAILED DESCRIPTION

The technical solutions in the present disclosure will be described clearly and completely below in conjunction with the drawings in the present disclosure, and obviously, the described embodiments are merely a part of the embodiments of the present disclosure, not all of the embodiments. Based on the embodiments in the present disclosure, all other embodiments obtained by those ordinary skilled without creative efforts shall fall within the protection scope of the present disclosure.

It should be noted that in the present disclosure, the words such as "exemplary (exemplarily)" or "for example", etc., are used to present an example, illustration, or explanation. Any embodiment or design solution described with "exemplary (exemplarily)" or "for example" in the present disclosure should not be interpreted as being more preferred or advantageous than other embodiments or design solutions. Specifically, the use of the terms such as "exemplary (exemplarily)" or "for example", etc., is intended to present related concepts in a specific manner.

Hereinafter, terms such as "first" and "second", etc., are used for descriptive purposes only, but cannot be understood to indicate or imply the relative importance or implicitly indicate the number of the indicated technical features. Thus, features defined with "first" or "second", etc., may explicitly or implicitly include one or more such features.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more.

As described in the background art, at present, both the deployment and position measurement of the RIS rely on manual work. However, manual measurement has large errors, making it difficult to ensure that the coverage performance of the base station and the RIS reaches the optimal level.

In addition, after the RIS experiences bad weather outdoors or an accident (such as a collision or theft), the position measurement information of the RIS changes, resulting in a sharp decline in the coverage performance of the base station, and even directly invalidating the codebooks of the base station and the RIS.

Therefore, there is an urgent need for a method capable of automatically measuring and maintaining the position parameter information of the RIS, to ensure that the coverage performance of the base station and the RIS reaches the optimal level.

For the above technical problems, the embodiments of the present disclosure provide a position measurement method, the idea of which is as follows: by different measurement sensors configured in the intelligent reflecting surface, high-precision position information of the intelligent reflecting surface may be automatically acquired with low measurement overhead. Furthermore, after acquiring the position information of the intelligent reflecting surface through sensor measurement, the position information of the intelligent reflecting surface may be reported to the base station, so that the base station may obtain the position information of the intelligent reflecting surface timely and perform corresponding operations. At the same time, the reporting process of the position information provided in the present disclosure is simple with low overhead.

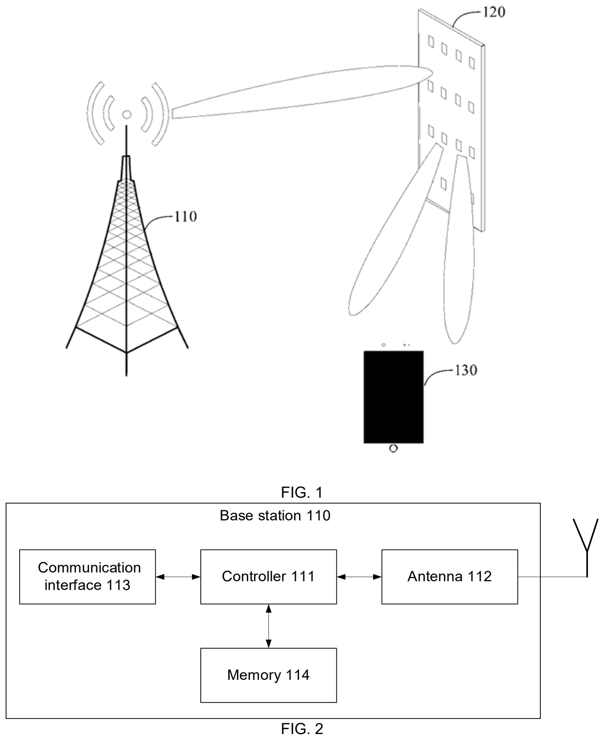

Referring to FIG. 1, FIG. 1 is a schematic diagram of an architecture of a communication system according to the embodiments of the present disclosure. As shown in FIG. 1, the communication system includes: a base station 110, an RIS 120, and a terminal device 130.

The base station 110 is used to transmit and receive electromagnetic waves.

Exemplarily, the base station 110 may be a next generation Node B (gNB).

In some embodiments, as shown in FIG. 2, the base station 110 includes: a controller 111 and an antenna 112. The controller 111 is used to manage a wireless communication interface and a radio channel. The antenna 112 is used to transmit and receive electromagnetic waves.

Exemplarily, the antenna 112 may transmit the electromagnetic waves to the RIS 120 according to the control of the controller 111.

In some embodiments, the base station 110 may further include a communication interface 113 for exchanging information with other devices. Exemplarily, the base station 110 may exchange information with the RIS 120 through the communication interface 113. The base station 110 may also exchange information with other devices, such as a network server through the communication interface 113.

In some embodiments, the base station 110 may further include a memory 114 for storing data. For example, the memory 114 may be used to store a codebook.

Exemplarily, the memory 114 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

The RIS 120 is used to, relay or forward the electromagnetic waves transmitted by the base station 110.

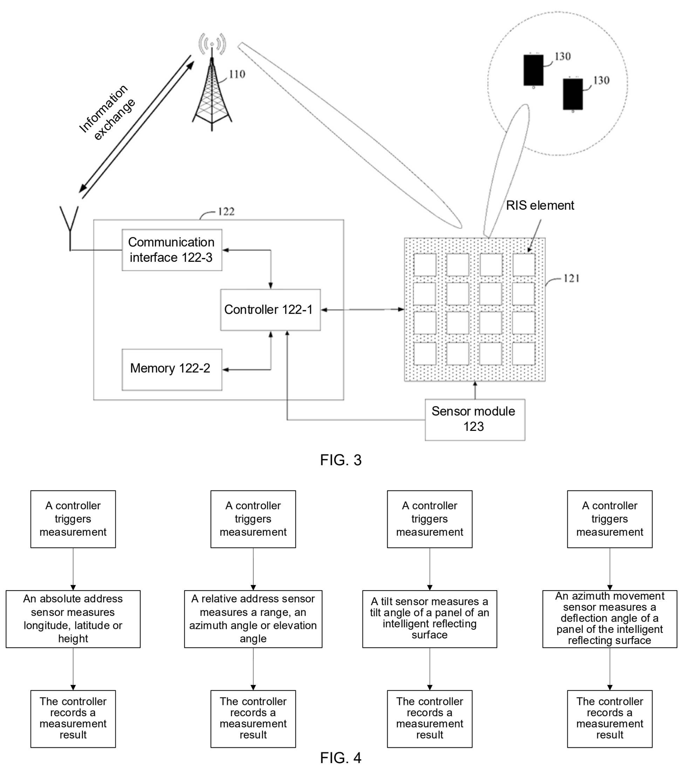

In some embodiments, as shown in FIG. 3, the RIS 120 includes a signal relay module (RIS-Forwarding, RIS-Fwd) 121, a communication and control module (RIS-Mobile-Termination, RIS-MT) 122, and a sensor module 123.

The RIS-Fwd121 includes a metasurface panel. The metasurface panel is a reflective array composed of RIS elements, and adjusts incident beams in different ways according to codebooks of different RIS elements (the codebooks are used to control the frequency spectrum, phase, amplitude, and polarization values of each RIS element), so that the outgoing beams may achieve variations in different amplitudes, different widths, different frequency shifts and different outgoing angles, as well as variations in single-beam reflection, multi-beam reflection, diffuse scattering, refraction, transmission, etc.

The RIS-MT 122 includes a controller 122-1, a memory 122-2, and a communication interface 122-3.

The controller 122-1 is used to transmit a relay beam indication (i.e., a codebook) to the RIS-Fwd 121 and control the working state of the RIS-Fwd 121.

Exemplarily, the controller 122-1 may control the working state of the RIS-Fwd121 according to the indication of the base station 110, such as: an on-off state (controlling the RIS-Fwd 121 to operate or not operate, etc.); a power control (controlling the amplitude of the reflected beam of the RIS-Fwd 121); a relay beam indication (the codebook of the RIS elements of the RIS-Fwd 121).

It can be understood that, a codebook represents a relative relationship between an incident beam and an outgoing beam. Therefore, for a reflective array, one codebook may also be referred to as a beam indication.

In some embodiments, the controller 122-1 is further used to control the sensor module 123 to measure the position information of the RIS. Furthermore, the controller 122-1 is also used to record the measurement result of the sensor module 123.

In some embodiments, the controller 122-1 is further used to determine whether the RIS-Fwd 121 is in an abnormal state according to the measurement result of the sensor module 123; when it is determined that the RIS-Fwd 121 is in an abnormal state, the controller 122-1 reports the measurement result of the sensor module 123 to the base station 110 through the communication interface 122-3.

The memory 122-2 is used to store a codebook.

The communication interface 122-3 is used to exchange information with other devices. Exemplarily, the RIS-MT 122 may exchange information with the base station 110 through the communication interface 122-3.

Exemplarily, the RIS-MT 122 may receive control information (e.g., codebook switching information, etc.) sent from the base station 110 through the communication interface 122-3, and send working state information of the RIS, configuration information of the RIS, and codebook set of the RIS to the base station through the communication interface 122-3.

In some embodiments, the RIS-MT 122 may send sensor capability information and a measurement result of the sensor module 123 to base station 110 through the communication interface 122-3.

Exemplarily, the communication interface 122-3 may exchange information with other devices through narrowband Internet of Things (Narrow Band Internet of Things, NB-IoT), fifth-generation mobile communication technology (5G), wireless fidelity (WiFi), etc.

The sensor module 123 is configured to detect the position information of the RIS-Fwd 121.

In some embodiments, the sensor module 123 includes but is not limited to: an absolute address sensor (Absolute Address Sensor), a relative address sensor (Relative Address Sensor), an azimuth movement sensor (Azimuth Movement Sensor), and a tilt sensor (Elevation Sensor).

The absolute address sensor is used to detect the absolute address of the RIS-Fwd121. Exemplarily, the absolute address sensor may be a global positioning system (GPS), BeiDou, or the like. It can be understood that, the base station 110 may accurately generate a beam directed to the RIS-Fwd 121 according to the absolute address of the RIS-Fwd 121 detected by the absolute address sensor.

For example, an absolute address may include longitude, latitude, and height. Exemplarily, the absolute address may be represented as: Absolute Address: {longitude, latitude, height}.

The relative address sensor is used to detect a range and/or a deflection angle of the RIS-Fwd121 relative to the base station. Exemplarily, the relative address sensor may be an infrared range sensor, a laser rangefinder, or the like. It can be understood that, the base station 110 may calculate path loss and a power control parameter according to the range of the RIS-Fwd 121 relative to the base station detected by the relative address sensor.

Exemplarily, a relative address (Relative Address) may include a range and angle information. The angle information may include an azimuth angle (the azimuth angle of the intelligent reflecting surface relative to the base station) and an elevation angle (the elevation angle of the intelligent reflecting surface relative to the base station). Exemplarily, the relative address may be represented as: Relative Address: {range, angle}.

The azimuth movement sensor is used to detect the deflection angle of the RIS-Fwd121. Exemplarily, the deflection angle may include an azimuth (Azimuth) angle. The azimuth angle detected by the azimuth movement sensor refers to the azimuth angle of the panel of the intelligent reflecting surface.

The tilt sensor is used to detect the tilt angle of the RIS-Fwd121. Exemplarily, the tilt angle may include an elevation angle. The tilt angle detected by the tilt sensor refers to the tilt angle of the panel of the intelligent reflecting surface.

It can be understood that, the base station 110 may select abeam set to be switched according to the deflection angle of the RIS-Fwd 121 detected by the azimuth movement sensor and the tilt angle of the RIS-Fwd 121 detected by the tilt sensor, to achieve better cell coverage.

As an implementation, the sensor module 123 may trigger measurement under the control of the controller 122-1 (e.g., may trigger in real time or periodically). Exemplarily, as shown in FIG. 4, the sensor module 123 may respectively trigger various sensor of the sensor module to perform measurement under the control of the controller 122-1 and send the measurement result to the controller 122-1. Then, the controller 122-1 records the measurement result of the sensor module 123.

As another implementation, the sensor module 123 may perform measurement according to a measurement command sent from the base station 110.

The terminal device 130 is configured to communicate by using the electromagnetic waves radiated by the RIS 120.

Exemplarily, the terminal device 130 may be a mobile phone, a tablet computer, a desktop computer, a laptop computer, a handheld computer, a notebook computer, an ultra-mobile personal computer (UMPC), a netbook computer, as well as a cellular phone, a personal digital assistant (PDA), an augmented reality (AR)/virtual reality (VR) device, etc. The embodiments of the present disclosure do not impose any special limitation on the form of the terminal device 130.

It should be noted that, the system architecture and application scenarios described in the embodiments of the present disclosure are intended to illustrate the technical solutions of the embodiments of the present disclosure more clearly, and do not limit the technical solutions provided in the embodiments of the present disclosure. Those ordinary skilled in the art can know that, with the evolution of the system architecture and the emergence of new traffic scenarios, the technical solutions provided in the embodiments of the present disclosure are also applicable to similar technical problems.

A position measurement method provided by the embodiment of the present disclosure is introduced below.

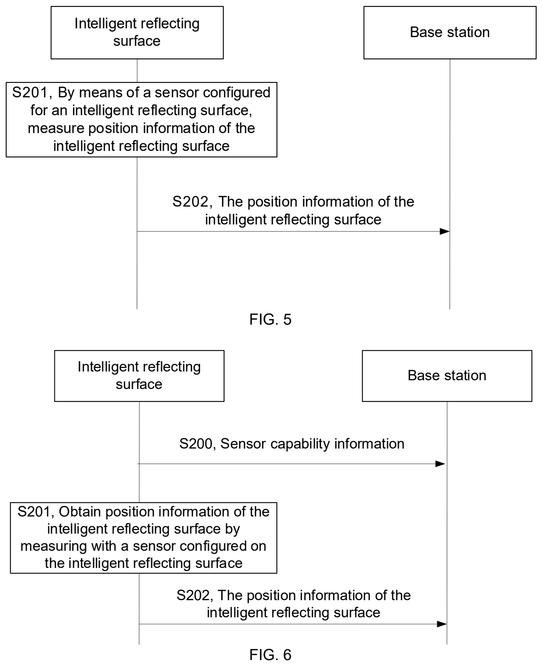

As shown in FIG. 5, the embodiments of the present disclosure provide a position measurement method, and the position measurement method includes S201 and S202 as follows.

In S201, an intelligent reflecting surface obtains position information of the intelligent reflecting surface by measuring with a sensor configured on the intelligent reflecting surface.

Exemplarily, the above position information includes at least one of: absolute address information, relative address information, or angle information.

The absolute address information includes at least one of: longitude, latitude, or height. The relative address information includes at least one of: a range of the intelligent reflecting surface relative to the base station, or a deflection angle of the intelligent reflecting surface relative to the base station. The angle information includes at least one of: an azimuth angle, or a downtilt angle.

In some embodiments, a controller of the intelligent reflecting surface, after acquiring the position information of the intelligent reflecting surface obtained by measuring with the sensor, may maintain the position information. Exemplarily, maintaining the position information may be implemented by calculating an average value of currently detected position information and historically detected position information according to the historically detected position information. It can be understood that, since a detection result may have errors, the average value of the historically detected results and the currently detected results may be used as a final detection result, which may reduce errors and improve accuracy.

In some embodiments, after obtaining the position information of the intelligent reflecting surface obtained by measuring with the sensor configured on the intelligent reflecting surface, the position measurement method further includes: a controller of the intelligent reflecting surface storing the position information of the intelligent reflecting surface in a memory for subsequent use.

In S202, the intelligent reflecting surface sends the position information of the intelligent reflecting surface to the base station.

In some embodiments, the intelligent reflecting surface fills in a parameter measurement field according to the measured position information of the intelligent reflecting surface; after the filling is completed, a communication interface of the intelligent reflecting surface reports the parameter measurement field through a specified uplink channel at an uplink moment. Exemplarily, a format of the parameter measurement field reported by the intelligent reflecting surface may be a format as follows:

```
RisAddressMeasurement=SEQUENCE {
RisAbsoluteAddress ENUMERATED {longitude, latitude, height}
RisRelativeAddress ENUMERATED {range, angle}
RisAzimuth ENUMERATED {azimuth}
RisElevation ENUMERATED {elevation}
}.
```

RisAddressMeasurement refers to the measured position information of the intelligent reflecting surface; SEQUENCE represents a sequence; and ENUMERATED means an enumeration.

In some embodiments, the above position measurement method also includes that: the intelligent reflecting surface determines whether the position information of the currently measured intelligent reflecting surface is a valid measurement; in a case where the position information of the currently measured intelligent reflecting surface is the valid measurement, the intelligent reflecting surface sends the position information to the base station; in a case where the position information of the currently measured intelligent reflecting surface is an invalid measurement, the intelligent reflecting surface feeds back to the base station that no reporting will be performed for this time.

Exemplarily, the position information measured when the intelligent reflecting surface is just powered on or after it wakes up from sleep is invalid.

In some embodiments, the base station, after receiving the position information sent from the intelligent reflecting surface, may calculate a codebook of the intelligent reflecting surface according to the position information so that a beam of the base station may be more accurately directed to the intelligent reflecting surface. Simultaneously, the base station may select a better codebook set according to the position information, to improve the performance of the coverage area of the intelligent reflecting surface.

In some embodiments, the base station, after receiving the position information sent from the intelligent reflecting surface, may compare the position information sent from the intelligent reflecting surface with the historical position information, to judge whether a condition of the intelligent reflecting surface is normal. In a case where the condition of the intelligent reflecting surface is abnormal, an alarm message may be reported to the server.

Exemplarily, the base station calculates a difference between the current position information and the historical position information sent from the intelligent reflecting surface, and determines whether the state of the intelligent reflecting surface is normal by judging whether the difference is less than a preset difference. If it is abnormal (for example, it is stolen, or a panel posture of the intelligent reflecting surface changes significantly), the alarm message is issued.

In some other embodiments, the base station, after receiving the position information sent from the intelligent reflecting surface, may store the position information of the intelligent reflecting surface in the memory and maintain each parameter value of the position information of the intelligent reflecting surface, so as to use parameter values for subsequent judgment.

In some embodiments, as shown in FIG. 6, before the above S201, the above position measurement method further includes the S200 as follows: the intelligent reflecting surface sending sensor capability information to the base station.

The sensor capability information is used to indicate at least one of: a type of the sensor, a measurement accuracy of the sensor, or a type of a parameter measured by the sensor.

Exemplarily, in a case where a sensor module of the intelligent reflecting surface includes an absolute address sensor, the sensor capability information sent from the intelligent reflecting surface to the base station includes: an absolute address sensor, a measurement accuracy of the absolute address sensor, and a type of the parameter measured by the absolute address sensor (including the absolute address; for example, longitude, latitude, and height).

In a case where a sensor module of the intelligent reflecting surface includes a relative address sensor, the sensor capability information sent from the intelligent reflecting surface to the base station includes: a relative address sensor, a measurement accuracy of the relative address sensor, and a type of the parameter measured by the relative address sensor (including the relative address; for example, a range, angle information).

In a case where the sensor module of the intelligent reflecting surface includes a tilt sensor, the sensor capability information sent from the intelligent reflecting surface to the base station includes: a tilt sensor, a measurement accuracy of the tilt sensor, and a type of parameters measured by the tilt sensor (including a tilt angle of the panel of the intelligent reflecting surface, such as the elevation angle). In a case where the sensor module of the intelligent reflecting surface includes an azimuth movement sensor, the sensor capability information sent from the intelligent reflecting surface to the base station includes: an azimuth movement sensor, a measurement accuracy of the azimuth movement sensor, and a type of parameters measured by the azimuth movement sensor (including a deflection angle of the panel of the intelligent reflecting surface, such as the azimuth angle).

In some embodiments, the intelligent reflecting surface sends the sensor capability information to the base station through a communication interface between the intelligent reflecting surface and the base station.

Exemplarily, the intelligent reflecting surface may send the sensor capability information to the base station an interface as follows:

```
RisAddressSensorType= SEQUENCE {
RisAbsoluteAddressSensor BIT STRING (SIZE (1))
RisRelativeAddressSensor BIT STRING (SIZE (1))
RisAzimuthMovementSensor BIT STRING (SIZE (1))
RisElevationSensor BIT STRING (SIZE (1))
}.
```

RisAddressSensorType refers to the capability of the sensor for measuring the position information of the intelligent reflecting surface; and BIT STRING represents a bit string.

In some embodiments, the above S200 may be implemented as follows: after the intelligent reflecting surface is powered on and synchronized with the base station, sending the sensor capability information to the base station. It can be understood that, after the intelligent reflecting surface and the base station are powered on, they need to complete the connection through their respective communication interfaces and achieve synchronization (to ensure mutual information transmission) and only in this way can the intelligent reflecting surface send the sensor capability information to the base station.

In some embodiments, the base station, after receiving the sensor capability information sent from the intelligent reflecting surface, may formulate a measurement strategy for the intelligent reflecting surface according to the sensor capability information. Exemplarily, the measurement strategy may include one or more of the following (1) to (5).

(1) In a case where the sensor module of the intelligent reflecting surface includes an absolute address sensor, the absolute address of the intelligent reflecting surface may be measured. Furthermore, a controller of the intelligent reflecting surface corrects the measured absolute address of the intelligent reflecting surface based on the relative position of a center of an array surface of the intelligent reflecting surface with respect to the absolute address sensor, thereby obtaining a corrected absolute address of the intelligent reflecting surface. In a case where the sensor module of the intelligent reflecting surface also includes a tilt sensor and an azimuth movement sensor, the controller may also correct the measured absolute address of the intelligent reflecting surface based on the azimuth angle and the tilt angle of the array surface of the intelligent reflecting surface measured in real time; if there are no such sensors, the controller may correct the measured absolute address of the intelligent reflecting surface based on the azimuth angle and the tilt angle preset during deployment.

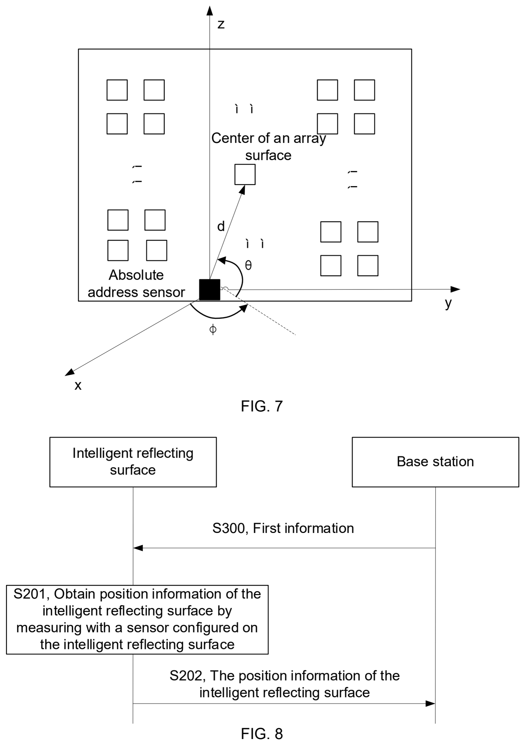

Exemplarily, as shown in FIG. 7, it is assumed that the absolute address measurement sensor is arranged in the black area; then a range between the absolute address measurement sensor and the center of the array surface of the intelligent reflecting surface is d, the azimuth angle of the center of the array surface of the intelligent reflecting surface relative to the absolute address measurement sensor is φ, and the elevation angle is θ. d is a preset value, and φ and θ are measured values or preset values. When the absolute address sensor measures the absolute address (x, y, z), it may correct the absolute address according to the following Formula (1), to obtain an ordinate of the center of the array surface of the RIS.

$$\begin{cases} x_{RIS} = x + d\cos\theta\cos\phi \\ y_{RIS} = y + d\cos\theta\sin\phi \\ z_{RIS} = z + d\sin\theta \end{cases}$$  Formula (1)

(2) In a case where the sensor module of the intelligent reflecting surface includes the relative address sensor, a range and angle information between the intelligent reflecting surface and the base station may be measured. Exemplarily, the controller of the intelligent reflecting surface acquires an approximate location of the base station by mechanically scanning the relative address sensor, and then uses the relative address sensor, to measure a precise range between the intelligent reflecting surface and the base station; and records the azimuth angle (the azimuth angle of the intelligent reflecting surface relative to the base station) and the elevation angle (the elevation angle of the intelligent reflecting surface relative to the base station) according to the mechanical rotation of the relative address sensor.

(3) In a case where the sensor module of the intelligent reflecting surface does not include the absolute address sensor and the relative address sensor, the controller of the intelligent reflecting surface does not need to measure the address. If the intelligent reflecting surface needs to be positioned at this time, the base station may position the intelligent reflecting surface according to the following solution: multiple base stations performing positioning based on the uplink signal of the intelligent reflecting surface. For example, an uplink time difference of arrival (UL-TDOA) positioning algorithm is used to calculate the absolute address of the intelligent reflecting surface according to the time difference of the uplink signals received by the multiple base stations and the address measurement results (longitude, latitude, and height) of the multiple base stations themselves.

(4) In a case where the sensor module of the intelligent reflecting surface includes the tilt sensor, tilt angle data of the panel of the intelligent reflecting surface may be measured, e.g., the elevation angle of the panel of the intelligent reflecting surface.

(5) In a case where the sensor module of the intelligent reflecting surface includes the azimuth movement sensor, a horizontal azimuth movement of the panel of the intelligent reflecting surface may be measured, and the deflection angle of the panel of the intelligent reflecting surface may be calculated according to the horizontal azimuth movement, e.g., the azimuth angle of the panel of the intelligent reflecting surface.

In some embodiments, the intelligent reflecting surface may send the position information of the intelligent reflecting surface to the base station according to an indication of the base station. Exemplarily, as shown in FIG. 8, before S201, the above position measurement method further includes the S300 as follows: the intelligent reflecting surface receiving a first message sent from the base station.

The first message is used to indicate the intelligent reflecting surface to feed back the position information.

In some embodiments, the first message is further used to indicate at least one of: a measurement strategy, a transmission resource for transmitting the position information, or a type of a parameter included in the position information.

The above measurement strategy is determined by the base station according to the sensor capability information sent from the intelligent reflecting surface. The transmission resource for transmitting the position information is allocated by the base station to the intelligent reflecting surface according to the current usage of transmission resources. The type of parameters included in the above position information may be determined by the base station according to the sensor capability information sent from the intelligent reflecting surface.

In some embodiments, the transmission resources for transmitting the position information may be a time domain resource or a frequency domain resource.

It can be understood that, the position measurement method provided in the embodiments of the present disclosure may perform measurement under the indication of the base station (for example, the intelligent reflecting surface performs measurement when it receives the first information sent from the base station to indicate the intelligent reflecting surface to feedback the position information), and report the position information of the intelligent reflecting surface to the base station. Furthermore, the base station may adaptively generate an automatic codebook according to the position information, to optimize the cell coverage performance. Simultaneously, the base station may also determine whether the state of the intelligent reflecting surface is normal based on the position information of the intelligent reflecting surface, and issue an alarm if the intelligent reflecting surface is in an abnormal state.

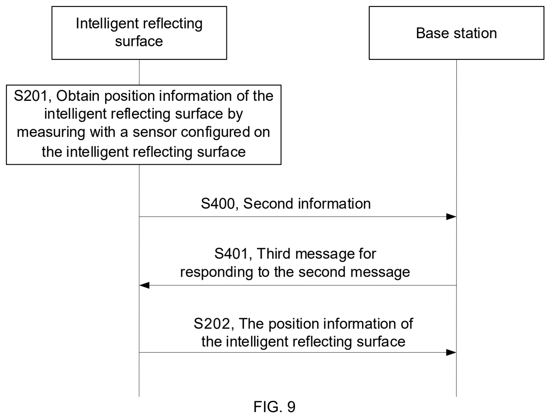

In some embodiments, the intelligent reflecting surface may actively report the position information of the intelligent reflecting surface detected by the sensor to the base station. Exemplarily, as shown in FIG. 9, before S202, the above position measurement method further includes the S400 and S401 as follows.

In S400, the intelligent reflecting surface sends a second message to the base station.

The second message is used to request to send position information to the base station.

In some embodiments, the above S400 may be implemented as: in a case where the intelligent reflecting surface detects that the intelligent reflecting surface is in an abnormal state, sending a second message to the base station.

Exemplarily, the controller of the intelligent reflecting surface may compare the position information of the intelligent reflecting surface obtained by measuring the position information of the intelligent reflecting surface with the sensor of the intelligent reflecting surface with the historical position information, and thereby judge whether the condition of the intelligent reflecting surface is normal.

In S401, the intelligent reflecting surface receives a third message sent from the base station in response to the second message.

In some embodiments, the third message is used to indicate that intelligent reflecting surface is agreed to send the position information. In a case where the third message is used to indicate that the intelligent reflecting surface is agreed to send the position information, the third message is further used to indicate at least one of: a measurement strategy, a transmission resource for transmitting the position information, or a type of parameters included in the position information.

The above measurement strategy is determined by the base station according to the sensor capability information sent from the intelligent reflecting surface. The transmission resource for transmitting the position information is allocated by the base station to the intelligent reflecting surface according to the current usage of transmission resources. The type of parameters included in the above position information may be determined by the base station according to the sensor capability information sent from the intelligent reflecting surface.

In some embodiments, the third message is used to indicate that the sending of the position information by the intelligent reflecting surface is rejected. In a case where the third message is used to indicate that the sending of the position information by the intelligent reflecting surface is rejected, the third message is also used to indicate a reason for the rejection.

Exemplarily, the reason for the rejection may be that the base station has insufficient transmission resources and no transmission resources may be allocated to the intelligent reflecting surface for transmitting the position information. It should be noted that, the embodiments of the present disclosure do not limit the reasons for rejection, and the base station may provide feedback to the intelligent reflecting surface according to actual conditions.

It can be understood that, the intelligent reflecting surface may actively report the position information to the base station when the intelligent reflecting surface detects that it is in an abnormal state, so that the base station may adjust the beam according to abnormal position information (for example, in a case where the position of the panel of the intelligent reflecting surface changes, the base station may regenerate the codebook according to the position information of the intelligent reflecting surface, to adjust the direction of the beam so that the beam may be radiated to the panel of the intelligent reflecting surface after the position changes); or, the base station may send alarm information to a network server (for example, in a case where the intelligent reflecting surface is stolen, the base station may send the alarm information to the network server to prompt the staff to deal with it in time).

For ease of understanding, the position measurement method provided in the embodiments of the present disclosure is explained below in the form of examples.

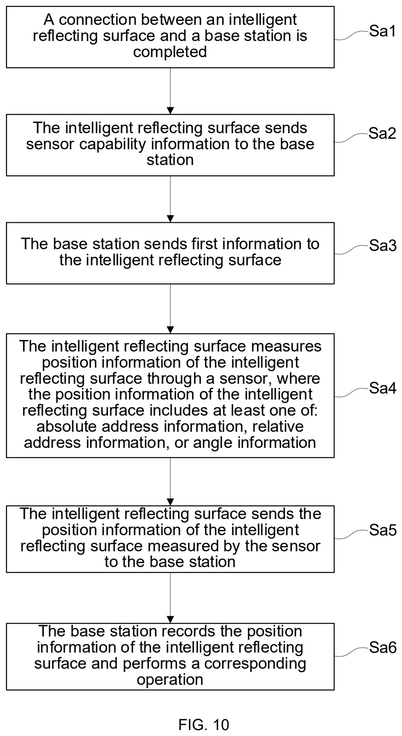

Exemplarily, the sensor module of the intelligent reflecting surface may include: a Beidou sensor, an azimuth movement sensor, and a tilt sensor. The intelligent reflecting surface may send the position information of the intelligent reflecting surface to the base station according to the indication of the base station. As shown in FIG. 10, the position measurement method of the intelligent reflecting surface may be implemented as Sa1 to Sa6 as follows.

In Sa1, a connection between an intelligent reflecting surface and a base station is completed.

Exemplarily, the intelligent reflecting surface is connected to the base station via a communication interface, so that the intelligent reflecting surface may communicate with the base station.

In Sa2, the intelligent reflector sends sensor capability information to the base station.

In some embodiments, the intelligent reflecting surface may also send array configuration information of the intelligent reflecting surface to the base station.

In Sa3, the base station sends first information to the smart transmitting surface.

The first information is used to indicate the intelligent reflecting surface to feed back the position information.

In Sa4, the intelligent reflecting surface measures the position information of the intelligent reflecting surface through a sensor. The position information of the intelligent reflecting surface includes at least one of: absolute address information, relative address information, or angle information.

Exemplarily, the controller of the intelligent reflecting surface may trigger the sensor module to perform measurement according to the first information sent from the base station; or the controller of the intelligent reflecting surface may trigger the sensor module to perform measurement periodically, and then store a measurement result in the memory of the intelligent reflecting surface. In this way, after receiving the first information sent from the base station, the controller of the intelligent reflecting surface may read the measurement result from the memory.

Exemplarily, the controller of the intelligent reflecting surface triggers the Beidou sensor to perform measurement and obtains the absolute address (longitude, latitude, height); triggers the azimuth movement sensor to perform measurement and obtains the azimuth angle of the intelligent reflecting surface; and triggers the tilt sensor to perform measurement and obtains the tilt angle of the intelligent reflecting surface.

In addition, the controller of the intelligent reflecting surface may also correct the measured absolute address of the intelligent reflecting surface according to the above-mentioned measured quantity, to obtain a corrected absolute address of the intelligent reflecting surface.

The controller of the intelligent reflecting surface may also maintain the current measured position information according to the historical measured position information, to reduce the error of the position information and improve the accuracy.

In Sa5, the intelligent reflecting surface sends the position information of the intelligent reflecting surface measured by the sensor to the base station.

Exemplarily, the intelligent reflecting surface fills valid measurement information in the parameter measurement field and reports the valid measurement at the uplink moment.

In Sa6, the base station records the position information of the intelligent reflecting surface and performs a corresponding operation.

Exemplarily, the base station, after acquiring a parameter measurement result of the intelligent reflecting surface, stores the parameter measurement result in the memory of the base station, then generates a beam directed to the intelligent reflecting surface based on the measurement result, and determines a codebook set for the coverage area of the intelligent reflecting surface.

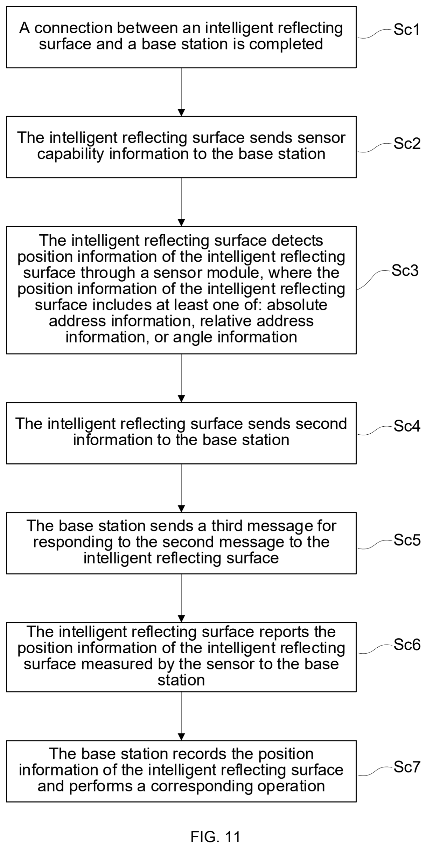

Exemplarily, the sensor module of the intelligent reflecting surface may include: a laser rangefinder, an azimuth movement sensor, and a tilt sensor. The intelligent reflecting surface may independently report the position information of the intelligent reflecting surface detected by the sensor to the base station. As shown in FIG. 11, the position measurement method of the intelligent reflecting surface may be implemented as Sc1 to Sc7 as follows.

In Sc1, a connection between an intelligent reflecting surface and a base station is completed.

Exemplarily, the intelligent reflecting surface is connected to the base station via a communication interface, so that the intelligent reflecting surface may communicate with the base station.

In Sc2, the intelligent reflector sends sensor capability information to the base station.

In some embodiments, the intelligent reflecting surface may also report array configuration information of the intelligent reflecting surface to the base station.

In Sc3, the intelligent reflecting surface detects position information of the intelligent reflecting surface through a sensor module. The position information of the intelligent reflecting surface includes at least one of: absolute address information, relative address information, or angle information.

Exemplarily, the controller of the intelligent reflecting surface triggers the sensor module, to detect the position information of the intelligent reflecting surface.

Exemplarily, the controller of the intelligent reflecting surface triggers the laser rangefinder to perform measurement and obtains a relative address (a range, an azimuth angle, and an elevation angle of the intelligent reflecting surface relative to the base station); triggers an azimuth movement sensor to perform measurement and obtains the azimuth angle of the intelligent reflecting surface; and triggers a tilt sensor to perform measurement and obtains a tilt angle of the intelligent reflecting surface.

In addition, the controller of the intelligent reflecting surface may also correct the measured relative address of the intelligent reflecting surface according to the above-mentioned measured quantity, to obtain a corrected relative address of the intelligent reflecting surface.

The controller of the intelligent reflecting surface may also maintain the current measured position information according to the historical measured position information, to reduce the error of the position information and improve the accuracy.

In Sc4, the intelligent reflecting surface sends second information to the base station.

The second information is used to request to send position information to the base station.

Exemplarily, the controller of the intelligent reflecting surface compares the position information of the intelligent reflecting surface obtained by measuring the position information of the intelligent reflecting surface with the sensor of the intelligent reflecting surface with the historical position information, and thereby judge whether the state of the intelligent reflecting surface is normal; in a case where the intelligent reflecting surface is in an abnormal state, the second message is sent to the base station.

In Sc5, the base station sends a third message to the intelligent reflecting surface in response to the second message.

Exemplarily, the above third information may be used to represent that the intelligent reflecting surface is agreed to send the position information, simultaneously, the third message is also used to indicate at least one of: a measurement strategy, a transmission resource for transmitting the position information, or a type of a parameter included in the position information.

In Sc6, the intelligent reflecting surface reports the position information of the intelligent reflecting surface measured by the sensor to the base station.

Exemplarily, the intelligent reflecting surface fills valid measurement information in the parameter measurement field and reports the valid measurement at the uplink moment.

In Sc7, the base station records the position information of the intelligent reflecting surface and performs a corresponding operation.

Exemplarily, the base station, after acquiring the parameter measurement result of the intelligent reflecting surface, further determines whether the intelligent reflecting surface is in an abnormal state, and sends alarm information to a network server in a case where the intelligent reflecting surface is in the abnormal state.

The above introduces the solutions of the embodiments of the present disclosure mainly from the perspective of methods. It can be understood that, in order to achieve the functions mentioned above, a measurement apparatus contains at least one of corresponding hardware structures and software modules for performing respective functions. Those skilled in the art should easily realize that the embodiments of the present disclosure can be implemented in the form of hardware or a combination of hardware and computer software, in combination with units and the algorithm steps of various examples described in the embodiments disclosed herein. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the embodiments of the present disclosure.

It can be understood that in order to achieve the functions mentioned above, a measurement apparatus contains corresponding hardware structures and/or software modules for performing respective functions. Those skilled in the art should easily realize that the present disclosure can be implemented in the form of hardware or a combination of hardware and computer software, in combination with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the present disclosure.

In the embodiments of the present disclosure, the measurement apparatus may be divided into functional modules according to the above-mentioned method embodiments, and for example, each functional module may be divided corresponding to each function, or two or more functions may also be integrated into one functional module. The above integrated module is implemented in the form of hardware or in the form of software. It should be noted that the division of modules in the embodiments of the present disclosure is illustrative, and is merely a kind of logical functional division, and there may be other division methods in actual implementations. The example in which each functional module is divided corresponding to each function, is taken for explanation below.

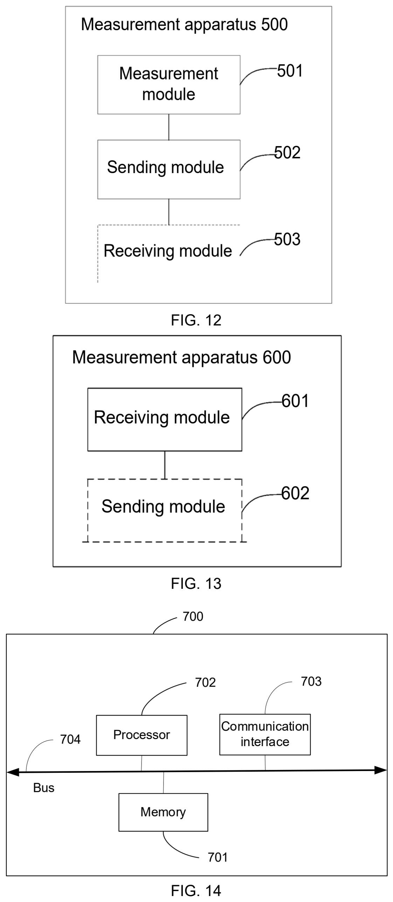

FIG. 12 is a structural schematic diagram of a measurement apparatus according to the embodiments of the present disclosure and the measurement apparatus may perform the position measurement method provided in the above method embodiments. As shown in FIG. 12, the measurement apparatus 500 includes a measurement module 501 and a sending module 502. In some other embodiments, the measurement apparatus 500 further includes a receiving module 503.

The measurement module 501, is configured to obtain position information of an intelligent reflecting surface by measuring with a sensor.

The sending module 502, is configured to send the position information to a base station.

In some embodiments, the receiving module 503, is configured to receive a first message sent from the base station, where the first message is used to indicate the intelligent reflecting surface to feed back the position information

In some embodiments, the first message is further used to indicate at least one of: a measurement strategy, a transmission resource for transmitting the position information, or a type of a parameter included in the position information.

In some embodiments, the sending module 502, is further configured to send a second message to the base station, where the second message is used to request to send the position information to the base station; and the receiving module 503 is further configured to, receive a third message for responding to the second message sent from the base station.

In some embodiments, in response to that the third message is used to indicate that the intelligent reflecting surface is agreed to send the position information, the third message is further used to indicate at least one of: a measurement strategy, a transmission resource for transmitting the position information, or a type of a parameter included in the position information.

In some embodiments, in response to that the third message is used to indicate that the sending of the position information by the intelligent reflecting surface is rejected, the third message is further used to indicate a reason for the rejection.

In some embodiments, the above sending module 502, is further configured to send a second message to the base station in response to that the intelligent reflecting surface is detected to be in an abnormal state.

In some embodiments, the sending module 502, is further configured to send sensor capability information to the base station, where the sensor capability information is used to indicate at least one of: a type of the sensor, a measurement accuracy of the sensor, or a type of a parameter measured by the sensor.

In some embodiments, the position information includes at least one of: absolute address information, relative address information, or angle information.

In some embodiments, in response to that the position information includes the absolute address information, the absolute address information includes at least one of: longitude, latitude, or height.

In some embodiments, in response to that the position information includes the relative address information, the relative address information includes at least one of: a range of the intelligent reflecting surface relative to the base station, or a deflection angle of the intelligent reflecting surface relative to the base station.

In some embodiments, in response to that the position information includes the angle information, the angle information includes at least one of: an azimuth angle or a downtilt angle.

FIG. 13 is a structural schematic diagram of another measurement apparatus according to the embodiments of the present disclosure and the measurement apparatus may perform the position measurement method provided in the above method embodiments. As shown in FIG. 13, the measurement apparatus 600 includes a receiving module 601. In some other embodiments, the measurement apparatus 600 further includes a sending module 602.

The receiving module 601, is configured to receive position information sent from an intelligent reflecting surface, where the position information is measured by the intelligent reflecting surface with a sensor.

In some embodiments, the sending module 602, is configured to send a first message to the intelligent reflecting surface, where the first message is used to indicate the intelligent reflecting surface to feed back the position information.

In some embodiments, the first message is further used to indicate at least one of: a measurement strategy, a transmission resource for transmitting the position information, or a type of a parameter included in the position information.

In some embodiments, the receiving module 601, is further configured to receive a second message sent from the intelligent reflecting surface, where the second message is used to request to send the position information to the base station; and the sending module 602 is further configured to, send a third message for responding to the second message to the intelligent reflecting surface.

In some embodiments, the receiving module 601, is further configured to receive sensor capability information sent from the intelligent reflecting surface, where the sensor capability information is used to indicate at least one of: a type of the sensor, a measurement accuracy of the sensor, or a type of a parameter measured by the sensor.

In some embodiments, the position information includes at least one of: absolute address information, relative address information, or angle information.

In a case of implementing the functions of the integrated modules mentioned above in the form of hardware, the embodiments of the present disclosure provide another possible structure of a communication apparatus involved in the above embodiments. As shown in FIG. 14, the communication apparatus 700 includes a processor 702 and a bus 704. In some embodiments, the communication apparatus 700 may also include a memory 701. In some embodiments, the communication apparatus 700 may further include a communication interface 703.

The processor 702 may be modules and circuits that implement or perform various exemplary logical blocks described in conjunction with the embodiments of the present disclosure. The processor 702 may be a central processing unit, a general-purpose processor, a digital signal processor, an application specific integrated circuit, a field programmable gate array or other programmable logic devices, transistor logic devices, hardware components, or any combination thereof. It may implement or perform various exemplary logical blocks, modules and circuits described in conjunction with the embodiments of the present disclosure. The processor 702 may also be a combination capable of implementing computing functions, for example, including a combination of one or more microprocessors, or a combination of a digital signal processor (DSP) and a microprocessor.

The communication interface 703 is configured to connect with other devices through a communication network. The communication network may be an Ethernet, a radio access network, a wireless local area network (WLAN), or the like.

The memory 701 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 701 may exist independently of the processor 702, and the memory 701 may be connected to the processor 702 through the bus 704, for storing instructions or program codes. When calling and executing the instructions or the program codes stored in the memory 701, the processor 702 is capable of implementing the position measurement method provided in the embodiments of the present disclosure.

As another implementation, the memory 701 may also be integrated with the processor 702.

The bus 704 may be an extended industry standard architecture (EISA) bus or the like. Buses 704 may be divided into address buses, data buses, control buses, or the like. For ease of representation, only one bold line is used for the representation in FIG. 14, but it does not mean that there is only one bus or one type of the bus.

Some embodiments of the present disclosure provide a computer readable storage medium (e.g., a non-transitory computer readable storage medium), and the computer readable storage medium has stored computer program instructions therein, and the computer program instructions, when executed on a computer, cause the computer to perform the position measurement method as described in any embodiment of the above-mentioned embodiments.

Exemplarily, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage media described in the present disclosure may represent one or more devices for storing information and/or other machine readable storage media for storing information. The term "machine readable storage medium" may include, but be not limited to, a radio channel and various other media capable of storing, containing, and/or carrying instructions and/or data.

Some embodiments of the present disclosure also provide a computer program product including instructions, and the computer program product, when running on a computer, causes the computer to perform the position measurement method as described in any of the above-mentioned embodiments.

The position measurement solution provided by the embodiments of the present disclosure can automatically obtain high-precision position information of the intelligent reflecting surface through different measurement sensors configured in the intelligent reflecting surface, and the measurement overhead is low. Furthermore, after obtaining the position information of the intelligent reflecting surface through sensor measurement, the position information of the intelligent reflecting surface may be reported to the base station, so that the base station can obtain the position information of the intelligent reflecting surface in a timely manner.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

**Claims**

1. A position measurement method, **characterized in that** the method is applied to an intelligent reflecting surface, the intelligent reflecting surface is configured with a sensor, and the method comprises:

   obtaining position information of the intelligent reflecting surface by measuring with the sensor; and
   sending the position information to a base station.

2. The method according to claim 1, further comprising:
   receiving a first message sent from the base station, wherein the first message is used to indicate the intelligent reflecting surface to feed back the position information.

3. The method according to claim 2, wherein the first message is further used to indicate at least one of: a measurement strategy, a transmission resource for transmitting the position information, or a type of a parameter comprised in the position information.

4. The method according to claim 1, further comprising:

   sending a second message to the base station, wherein the second message is used to request to send the position information to the base station; and
   receiving a third message for responding to the second message sent from the base station.

5. The method according to claim 4, wherein in response to that the third message is used to indicate that the intelligent reflecting surface is agreed to send the position information, the third message is further used to indicate at least one of: a measurement strategy, a transmission resource for transmitting the position information, or a type of a parameter comprised in the position information.

6. The method according to claim 4, wherein in response to that the third message is used to indicate that the sending of the position information by the intelligent reflecting surface is rejected, the third message is further used to indicate a reason for the rejection.

7. The method according to claim 4, wherein sending the second message to the base station comprises:
in response to that the intelligent reflecting surface is detected to be in an abnormal state, sending the second message to the base station.

8. The method according to claim 1, further comprising:
sending sensor capability information to the base station, wherein the sensor capability information is used to indicate at least one of: a type of the sensor, a measurement accuracy of the sensor, or a type of a parameter measured by the sensor.

9. The method according to claim 1, wherein the position information comprises at least one of: absolute address information, relative address information, or angle information.

10. The method according to claim 9, wherein in response to that the position information comprises the absolute address information, the absolute address information comprises at least one of: longitude, latitude, or height.

11. The method according to claim 9, wherein in response to that the position information comprises the relative address information, the relative address information comprises at least one of: a distance of the intelligent reflecting surface relative to the base station, or a deflection angle of the intelligent reflecting surface relative to the base station.

12. The method according to claim 9, wherein in response to that the position information comprises the angle information, the angle information comprises at least one of: an azimuth angle or an elevation angle.

13. A position measurement method, **characterized in that** the method is applied to a base station, and comprises:
receiving position information sent from an intelligent reflecting surface, wherein the position information is measured by the intelligent reflecting surface with a sensor.

14. The method according to claim 13, further comprising:
sending a first message to the intelligent reflecting surface, wherein the first message is used to indicate the intelligent reflecting surface to feed back the position information.

15. The method according to claim 14, wherein the first message is further used to indicate at least one of: a measurement strategy, a transmission resource for transmitting the position information, or a type of a parameter comprised in the position information.

16. The method according to claim 13, further comprising:

receiving a second message sent from the intelligent reflecting surface, wherein the second message is used to request to send the position information to the base station; and
sending a third message for responding to the second message to the intelligent reflecting surface.

17. The method according to claim 13, further comprising:
receiving sensor capability information sent from the intelligent reflecting surface, wherein the sensor capability information is used to indicate at least one of: a type of the sensor, a measurement accuracy of the sensor, or a type of a parameter measured by the sensor.

18. The method according to claim 13, wherein the position information comprises at least one of: absolute address information, relative address information, or angle information.

19. A communication apparatus, **characterized by** comprising: a memory and a processor; wherein the memory and the processor are coupled; the memory is configured to store instructions executable by the processor; and the processor, when executing the instructions, performs the method according to any one of claims 1 to 12 or performs the method according to any one of claims 13 to 18.

20. A computer readable storage medium, **characterized in that** the computer readable storage medium has stored computer instructions thereon, and the computer instructions, when executed on an electronic device, cause the electronic device to perform the method according to any one of claims 1 to 12 or perform the method according to any one of claims 13 to 18.

FIG. 1

Base station 110

| Communication interface 113 | Controller 111 | Antenna 112 |

Memory 114

FIG. 2

FIG. 3

FIG. 4

```
┌─────────────────────┐                    ┌─────────────────────┐
│ Intelligent reflecting │                    │    Base station     │
│       surface       │                    │                     │
└─────────────────────┘                    └─────────────────────┘
           │                                           │
┌─────────────────────────────────┐                   │
│ S201, By means of a sensor configured │              │
│  for an intelligent reflecting surface, │            │
│  measure position information of the    │            │
│    intelligent reflecting surface      │             │
└─────────────────────────────────┘                   │
           │                                           │
           │   S202, The position information of the   │
           │        intelligent reflecting surface     │
           │──────────────────────────────────────────►│
           │                                           │
```

FIG. 5

```
┌─────────────────────┐                    ┌─────────────────────┐
│ Intelligent reflecting │                    │    Base station     │
│       surface       │                    │                     │
└─────────────────────┘                    └─────────────────────┘
           │                                           │
           │     S200, Sensor capability information    │
           │──────────────────────────────────────────►│
           │                                           │
┌─────────────────────────────────┐                   │
│ S201, Obtain position information of the │           │
│    intelligent reflecting surface by     │           │
│  measuring with a sensor configured on   │           │
│    the intelligent reflecting surface    │           │
└─────────────────────────────────┘                   │
           │   S202, The position information of the    │
           │        intelligent reflecting surface      │
           │──────────────────────────────────────────►│
```

FIG. 6

z

Center of an array
surface

d

θ

Absolute
address sensor

y

φ

x

FIG. 7

| Intelligent reflecting surface | Base station |
|---|---|

S300, First information

S201, Obtain position information of the intelligent reflecting surface by measuring with a sensor configured on the intelligent reflecting surface

S202, The position information of the intelligent reflecting surface

FIG. 8

```
┌─────────────────────┐                    ┌─────────────────────┐
│ Intelligent reflecting │                   │    Base station      │
│      surface        │                     │                     │
└─────────┬───────────┘                    └──────────┬──────────┘
          │                                            │
┌─────────┴──────────────────┐                        │
│ S201, Obtain position information of the             │
│  intelligent reflecting surface by                   │
│ measuring with a sensor configured on                │
│  the intelligent reflecting surface                  │
└─────────┬──────────────────┘                        │
          │                                            │
          │        S400, Second information            │
          │───────────────────────────────────────────▶│
          │                                            │
          │        S401, Third message for             │
          │     responding to the second message       │
          │◀───────────────────────────────────────────│
          │                                            │
          │     S202, The position information of       │
          │       the intelligent reflecting surface    │
          │───────────────────────────────────────────▶│
          │                                            │
```

FIG. 9

A connection between an intelligent reflecting surface and a base station is completed — Sa1

The intelligent reflecting surface sends sensor capability information to the base station — Sa2

The base station sends first information to the intelligent reflecting surface — Sa3

The intelligent reflecting surface measures position information of the intelligent reflecting surface through a sensor, where the position information of the intelligent reflecting surface includes at least one of: absolute address information, relative address information, or angle information — Sa4

The intelligent reflecting surface sends the position information of the intelligent reflecting surface measured by the sensor to the base station — Sa5

The base station records the position information of the intelligent reflecting surface and performs a corresponding operation — Sa6

FIG. 10

A connection between an intelligent reflecting surface and a base station is completed — Sc1

The intelligent reflecting surface sends sensor capability information to the base station — Sc2

The intelligent reflecting surface detects position information of the intelligent reflecting surface through a sensor module, where the position information of the intelligent reflecting surface includes at least one of: absolute address information, relative address information, or angle information — Sc3

The intelligent reflecting surface sends second information to the base station — Sc4

The base station sends a third message for responding to the second message to the intelligent reflecting surface — Sc5

The intelligent reflecting surface reports the position information of the intelligent reflecting surface measured by the sensor to the base station — Sc6

The base station records the position information of the intelligent reflecting surface and performs a corresponding operation — Sc7

FIG. 11

Measurement apparatus 500

Measurement
module —501

Sending module —502

Receiving module —503

FIG. 12

Measurement apparatus 600

Receiving module —601

Sending module —602

FIG. 13

700

702        703

704        Processor    Communication
                        interface

Bus

Memory

701

FIG. 14

# EP 4 734 582 A1

| | INTERNATIONAL SEARCH REPORT | International application No. |
|---|---|---|
| | | **PCT/CN2024/090306** |

**A. CLASSIFICATION OF SUBJECT MATTER**

H04W 16/18(2009.01)i

According to International Patent Classification (IPC) or to both national classification and IPC

**B. FIELDS SEARCHED**

Minimum documentation searched (classification system followed by classification symbols)

IPC: H04L, H04W, G06F

Documentation searched other than minimum documentation to the extent that such documents are included in the fields searched

Electronic data base consulted during the international search (name of data base and, where practicable, search terms used)

DWPI; WPABS; CNTXT; CNKI; ENTXT; 3GPP: 智能反射面, 智能表面, 位置, 经度, 纬度, 坐标, 高度, 角度, 传感器, 基站, 指示, RIS, location, longitude, latitude, angle, height, sensor, BS, indicat+

**C. DOCUMENTS CONSIDERED TO BE RELEVANT**

| Category* | Citation of document, with indication, where appropriate, of the relevant passages | Relevant to claim No. |
|---|---|---|
| X | US 2022271995 A1 (QUALCOMM INC.) 25 August 2022 (2022-08-25) description, paragraphs 67-199 | 1-2, 7-14, 17-20 |
| X | WO 2023077497 A1 (QUALCOMM INC.) 11 May 2023 (2023-05-11) description, paragraphs 38-282 | 1-2, 7-14, 17-20 |
| Y | US 2022271995 A1 (QUALCOMM INC.) 25 August 2022 (2022-08-25) description, paragraphs 67-199 | 3-6, 15-16 |
| Y | WO 2023077497 A1 (QUALCOMM INC.) 11 May 2023 (2023-05-11) description, paragraphs 38-282 | 3-6, 15-16 |
| Y | CN 101730222 A (HUAWEI TECHNOLOGIES CO., LTD.) 09 June 2010 (2010-06-09) description, paragraphs 137-250 | 3-6, 15-16 |
| A | CN 114785391 A (TSINGHUA UNIVERSITY) 22 July 2022 (2022-07-22) entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 June 2024** | **11 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/090306**

| Patent document cited in search report | | | Publication date (day/month/year) | Patent family member(s) | | | Publication date (day/month/year) |
|---|---|---|---|---|---|---|---|
| US | 2022271995 | A1 | 25 August 2022 | WO | 2022182543 | A2 | 01 September 2022 |
| | | | | WO | 2022182543 | A3 | 20 October 2022 |
| | | | | EP | 4298838 | A2 | 03 January 2024 |
| | | | | US | 11750454 | B2 | 05 September 2023 |
| WO | 2023077497 | A1 | 11 May 2023 | None | | | |
| CN | 101730222 | A | 09 June 2010 | None | | | |
| CN | 114785391 | A | 22 July 2022 | None | | | |

Form PCT/ISA/210 (patent family annex) (July 2022)

**REFERENCES CITED IN THE DESCRIPTION**

**Patent documents cited in the description**

- CN 202310763114